Europäisches Patentamt

European Patent Office

Office européen des brevets

(19)

(11) Publication number: **0 096 504**
**B1**

## EUROPEAN PATENT SPECIFICATION

(12)

(45) Date of publication of patent specification: **16.12.87**

(51) Int. Cl.⁴: **G 11 B 7/24**

(21) Application number: **83302974.7**

(22) Date of filing: **24.05.83**

(54) Aurous archival record films for digital data storage.

(30) Priority: **25.05.82 US 381692**

(43) Date of publication of application:
**21.12.83 Bulletin 83/51**

(45) Publication of the grant of the patent:
**16.12.87 Bulletin 87/51**

(84) Designated Contracting States:
**BE DE FR GB NL SE**

(56) References cited:
**EP-A-0 023 809**
**EP-A-0 079 231**
**EP-A-0 083 396**
**AT-B- 365 810**
**DE-A-2 943 203**
**DE-A-3 042 606**
**US-A-2 799 600**
**US-A-4 222 071**
**US-A-4 252 890**
**US-A-4 285 056**

**IEEE Journal of Quantum Electronics,**
**Vol.QE17, No.1, Jan.1981, pages 69-77**

(73) Proprietor: **UNISYS CORPORATION**
**Burroughs Place**
**Detroit Michigan 48232 (US)**

(72) Inventor: **Shevlin, Craig Martin**
**5200 Piedmont Drive**
**Santa Rosa, CA. 94504 (US)**

(74) Representative: **Kirby, Harold Douglas Benson
et al**
**G.F. Redfern & Company Marlborough Lodge 14
Farncombe Road
Worthing West Sussex BN11 2BT (GB)**

Courier Press, Leamington Spa, England.

**Description**

The present invention relates to a novel high density archival information storage medium, and more particularly to such a medium adapted for recording with low-power laser means.

The present application contains material common to European Patent Applications Nos. EPA 97,430 and EPA 96,501 which claim methods of fire detection using island films; to European Patent Application EPA 98,045 which claims a method of preparing and displaying a transmissive mask using island films of gold with tin, lead or antimony and to European Patent Application EPA 98,046 which claims a tri-layer structure using an island film of noble metal with antimony. All of the aforementioned applications were filed by the same applicant.

Introduction, background

Optical storage of digital data is a relatively new technology, concerned with the storage and retrievel of digital information utilizing optical techniques, using a special related (ODD, "optical digital data") medium, such as an ODD disk. By analogy such data is conventionally stored on magnetic media like tapes or disks commonly used with high speed digital computers today.

This disclosure relates to optical media and associated read/write techniques and apparatus which are adapted to record and read-back digital information using a focused beam of prescribed radiation energy, especially with low power laser equipment.

As workers know, success in designing and operating such a system depends greatly on the storage medium. Workers in the art have, for some time now puzzled over how to develop a satisfactory ODD disk medium, especially one adapted for low power lasers presently available and exhibiting extended operational life—on the order of 10+ years! This invention teaches a practical ODD disk for this purpose, one adapted for such long life and for use as archival record storage in high speed computer systems of today.

Recording media for radiation beams, generally:

Requirements for such ODD media are stringent; e.g., involving high bit density and cost-effective information storage at satisfactory write/read rates; preferably using low-power lasers. (Workers recognize the simplicity, speed and power of such laser implementation, where one need only modulate and deflect a laser beam for read/write operations).

In related applications (e.g., video disk recording) workers have used lasers and, for certain aspects thereof, have suggested media using a metal film as an "information layer"—this layer to be softened, melted or vaporized (e.g., thermally-ablated) by a write-laser-beam so as to form a "void" (a pit, hole, bubble, etc., or other deformation) in the layer as the "bit". Such a film may be coated on the surface of a rotating disk.

Some workers have felt that such laser recording would be promising for computer records of various kinds; e.g., the mentioned ODD media. They have predicted that practical systems await archival media which is responsive to low-power laser writing and that this in turn depends on whether one can find such an information layer (material) able to be melted (or vaporized, etc.) at current practical low-power levels. This may also depend on the radiation efficiency of the associated system.

Thus, workers have for some time been looking for such laser recording materials which exhibit high "thermal efficiency" (a measure of how much of the heat generated at the recording site remains sufficiently localized to allow "pit" formation). For this they have generally considered recording materials with a low melting point and low thermal diffusivity (tellurium, lead, bismuth and indium are examples). The low melting point presumably facilitates a write-pulse of minimum energy—thus minimizing system cost or increasing bandwidth.

And, since workers feel one must use a low-power laser for such recording (e.g., to enhance the operating life of a laser and minimize its cost and size), it has generally seemed even more desirable that the metal chosen for such an information (absorber) film have an "outstandingly-low" melting point ("adequately-high sensitivity") so that the desired "bit-void" may be formed with minimal laser power.

Te absorber films:

Now, many workers have contemplated using tellurium (Te) absorber films for this, or related laser-recording. There are several reasons. Tellurium has an attractively low (bulk-) melting point (about 450°C), conducts heat poorly and appears able to provide good sensitivity and S/N ratio; also, it is relatively convenient to deposit as a thin film. Bismuth is also commonly suggested for similar reasons. And related alloys (e.g., as Te-Ge, Te-As-Se and Bi-Se) have been suggested as of interest.

Tellurium has been thought to exhibit a low write-threshold (energy)—e.g., when compared with Aluminum—as well as having a relatively low thermal diffusivity—e.g., see U.S. 4,222,071, to *Bell*, et al; also see "Review of Optical Storage Media" by *Zech*, SPIE Vol. 177, Optical Information Storage, 1979, page 56 et sequ.; and also see "Optical Recording Media Review" by *Bartolini,* page 2 et sequ. of 1977 SPIE Vol. 123, "Optical Storage Materials and Methods".

For instance, this Bartolini article discusses such absorber films ("Ablative Thin Films") along with ten other optical recording means—including "Photopolymers", that is organic compounds known to undergo

2

**0 096 504**

photochemical changes which involve a shift in refractive index. The Zech article discusses absorber films arranged and used so that with laser-writing a "pit" is developed in the absorber layer, this information being detected according to differential reflectivity (similarly for Bell patent).

For such known "deformational recording", it appears that the thermal energy delivered by a high intensity radiation beam ('Write-Beam" of a Laser) is such that the "write-site" will soften, melt or ablate, in at least part of the beam cross-section. Many believe that surface tension then causes a "transverse cavitation" (see article by Zech cited above), leading in turn to the formation of a "pit" or hole, usually slightly elliptical. (See "Melting Holes in Metal Films for Real-Time, High Density Data Storage" by Cochran and Ferrier, SPIE Proceedings, August 1977, pages 17—31).

Absorber films:

The present invention shows that a related kind of laser-recording can be done at temperatures well-below the melting point of such an "absorber" (i.e., without heating the bit site to its "bulk-melting-point") and that materials like gold, having a relatively high melting point and rather high thermal conductivity—characteristics heretofore generally shunned by works for the instant purposes—can yield a surprisingly good absorber film; one comparable in sensitivity to "hitherto-preferred" absorbers like Tellurium.

Of course, some have vaguely speculated that "high melting point" materials like Titanium and Gold (also platinum, rhodium, nickel, chromium, manganese and vanadium—e.g., cf U.S. 4,285,056 to Bell or IBM TD Bulletin, March '71, page 3001) might be suitable for such "deformation" absorber layers. However, such speculations have paid no heed to the practical problem of "sensitivity" or to how a lower power laser can record on them as mentioned above. Or they have ignored the associated problem of high conductivity (where heat is readily conducted away from the recording site, write-energy is wasted, and sensitivity degraded—note a metal like gold has a high thermal conductivity, whereas Ti and Te do not).

Observers have heretofore generally acknowledged that "high-melting-point" metals are quite unlikely as absorber candidates (e.g., as expressed in cited U.S. 4,222,071 where the "low-melting-point" and poor conductivity of Te was heartily endorsed as yielding superior sensitivity and enabling one to record with a low-power laser. Thus, metals such as Au, which are the Reverse; i.e., good heat conductors with high melting point, should, in theory, be the worst "absorbers"). Yet, the present invention shows that just such metals as gold can be so used and can function at least as well as known absorbers—e.g., having a sensitivity somewhat equivalent to Te, along with much superior archival life.

This invention, further, shows that such absorber films—contrary to what is generally taught in the art—evidently need not heat the bit site to the classic bulk metal melting point for recording.

Extended archival life:

A major attraction of optical data storage technology is the increased storage capacity it promises; e.g, the order of 100× that of magnetic tape. An optical data disk as here contemplated will be assumed to store ("non-erasable") information thereon for an extended archival life on the order of 10 years or more. Such extended life is a goal as yet unattained in the art, though workers would dearly love to do so. The present invention promises media exhibiting such archival life, being especially adapted for optical mass memory and like applications.

By contrast, commonly-suggested absorber metals like bismuth and tellurium are known to oxidize all too quickly and to otherwise readily degrade in the typical user environment: hence, they are poor candidates for such archival records (e.g., see cited article by Ash, et al. 1981; and Zech article; also demonstrated by Example I below). Workers acknowledge that Tellurium has particularly poor archival stability—i.e., its read out signal quickly degrades with time. This degradation is accelerated in a high humidity environment; and is typically characterized by rapid increase in overall optical transmission (presumably caused by a general oxidation of the metal), as well as by severe attack on selected bit sites, beginning at "defect sites" in the metal film. And bismuth is similar. Extended archival stability is addressed by this invention which teaches the analogous use of absorber films of gold, gold alloy or palladium island films with a tin island strike layer etc.—materials which are quite archival and storage media, especially as for such optical data disk records for (as in Table I) computers. Thus, as a feature of novelty, I contemplate the use of such materials for records exhibiting extended archival life, i.e., being extremely resistant to oxidation or like environmental degradation, during typical EDP storage and use (thus, no "loss" of recorded information occurring over extended, storage life, with reflectivity remaining stable enough to "read")—something no practical storage medium or associated system can yet provide; especially where "good" sensitivity is also required. The invention teaches just this step forward.

European Patent Application 0,023,809 discloses an optical data storage medium wherein a continuous film of tellurium is used as an absorber layer in a tri-layer optical data storage disc. The present invention seeks to provide improvement thereover by using a gold, gold alloy or palladium layer having improved archival data storage properties as the absorber layer in an optical tri-layer structure and further seeks improvement by providing that the layer is in low energy laser beam writable insular form where the adhesion of the gold, gold alloy or palladium absorber layer is controlled by the provision of a strike layer thinly deposited over the spacer layer of the tri-layer structure. United States Patent 4,252,890 discloses a photo optic recording medium comprising a thin layer of selenium, selenium tellurium alloys, tellurium,

3

arsenic, zinc, sulphur, gallium, cobalt silver, or even thermoplastics and waxes and paraffins as an agglomerable photosensitive layer which can be caused to alter its reflection in a bi- or tri-layer structure for recording photographic images when light above a predetermined intensity level is incident thereon. The present invention seeks to provide improvement thereover by employing a gold, palladium or gold alloy insular photosensitive absorber layer whose adhesion and island size is controlled by a thin strike layer applied to the transparent spacer layer in the optical tri-structure prior to deposition of the absorber layer. In an article by Bartolini, Bell & Spong in the I.E.E.E. Journal of Quantum Electronics, Volume QE-17, No. 1, in January, 1981 on Pages 69 to 77 thereof entitled "Diode Laser Optical Recording Using Tri-Layer Structures" there is disclosed the use of a continuous tellurium absorber layer over an optically transparent dielectric spacer layer and aluminium reflector layer in a tri-layer structure for use in recording digital data by disruption of the tellurium absorber layer using a modulated laser beam. The present invention seeks to provide improvement thereover by replacing the tellurium layer with a finally divided insular gold, gold alloy or palladium layer requiring even less energy from the writing laser beam to cause agglomeration of the islands and the recording of a data bit than does the tellurium film, and by providing that the islands size and adhesion of the islands to the underlying dielectric spacer layer is controlled by a tin island strike coating laid down on the spacer layer prior to deposition of the absorber layer.

Not pre-published co-pending European Patent Application 0,083,396 discloses a gold-island absorber layer in an optical tri-layer for use as an optical data storage medium written by a low energy laser beam. The present invention seeks to provide novelty thereover by controlling the island size and adhesion of a gold, palladium or gold alloy absorber layer by means of a tin island strike layer laid down upon the optical spacer layer of the tri-layer structure prior to deposition of the absorber layer.

Not pre-published co-pending European Patent Application 0,079,231 by the present applicants discloses the use of thin gold absorber layers in optical tri-layer structures for use in recording digital data using a low energy laser beam and further discloses the use as the absorber layer of a laminated layer of gold and tin wherein alternate layers of gold and tin are vapour deposited to form the absorber layer. The present application seeks to provide novelty thereover by arranging that gold, gold alloy or palladium island size and adhesion to the underlying optical spacer layer are controlled by provision of a thin tin island strike layer on the spacer layer prior to deposition of the absorber layer.

DE—A—2 943 203 describes a deformation process in connection with inter alia gold alloys and refers to antimony as a sensitivity material.

The novel recording media and associated deposition techniques taught herein will be generally assumed as meeting the foregoing criteria; and, where possible, as also meeting one or more of the "target performance criteria" presented in Table I below. (See also "Optical Properties of Tellurium Films Used for Data Recording" by Ash and Allen, SPIE Proceedings, Vol. 222, 1980; "Design and Production of Tellurium Optical Data Disks" by Rancourt, SPIE Proceedings, No, 299, 1981).

TABLE I
(Target criteria for media)

1. "High" sensitivity:

allow recording by low-power laser means. "Sensitivity" will be understood as minimum laser power needed for bit formation (change in spot reflectivity, akin to that resulting from formation of a hole, or other void or like change in medium, giving adequate read-out at contemplated recording rate).

With the invention, one may typically "write" with the order of 5—15 mW laser power for approximately 40—60 n.sec.; (pulse duration),—yet not degraded by read-out (i.e., on repeated playback).

1-A. High S/N: (adequate read-out)

Signal to noise ratio (for adequate read-out) on the order of about 30—40 dB Min. peak signal to RMS noise.

2. "Archival stability": (10+ years life):

Able to be used or stored in "normal computer environment" without dropping below min. read-out for about 10—15 years (maintaining min. S/N).

3. "Computer records":

Assume capability to operate with present day high speed digital computers—e.g., with at least the same capabilities as today's magnetic disk storage equipment (e.g., bit density of about $10^6$ bits/cm$^2$ or better)—"Raw Bit-Error Rate" less than $10^{-6}$.

4. "Deposit-able"

suitable film(s) can be deposited on "commercial scale" and give repeatable, controlled characteristics.

5. Overcoat-ability:

absorber film can be supercoated (e.g., up to a few mils) to mechanically protect it and defocus "surface dirt" without sacrificing above features, e.g., still give adequate read-out (preferably overcoat can also impede heat and contaminant-gases, etc. from absorber film).

Thus it is an object hereof to provide the foregoing, and other related, features and advantages. A more particular object is to do so, teaching the deposition of gold, gold alloy or palladium absorber (information)· films in "island" form with a tin island strike layer.

Another object is to teach such films exhibiting good sensitivity, adequate for low power lasers; as well as extended archival life. A further object is to teach preparation of such records which are suitable for recording without need to "melt" the information layer; i.e. developing "altered reflectivity" bits (pits) while keeping the site well below its bulk melting temperature.

The present invention consists in a method of manufacture for an optical medium for storage of digital data written with a laser beam thereon, said method including the steps of: depositing a light reflecting layer on a supportive substrate; depositing an optically transparent spacer layer over said reflecting layer; and depositing an absorber layer over said spacer layer; the depths of said spacer layer and of said absorber layer being chosen to provide a predetermined degree of extinction of light of a predetermined wavelength reflected from said medium; said method being characterised by: providing as said absorber layer a layer deposited in a divided form comprising a plurality of separate islands; by providing a predominance of an absorber metal in said absorber; by including the step of providing a thin strike layer of tin onto said spacer layer prior to deposition of said absorber layer for said strike layer to control the degree of adhesion and the dimensions of said absorber layer islands; and by selecting said absorber metal from a set consisting in gold, palladium and gold alloy.

Brief description of the drawings

These and other features and advantages of the present invention will be appreciated by workers as they become better understood by reference to the following detailed description of the present preferred embodiments, these being considered in conjunction with the accompanying drawings, wherein like reference symbols denote like elements:

Figure 1 provides a cross-sectional view of an idealized portion of a prior art recording medium;

Figure 2 provides a similar view of a novel preferred recording medium ebodiment exhibiting a construction in accordance with principles of the present invention;

Figure 3 is a similar view of a preferred disk record embodiment;

Figure 4 is a plan idealized view of a certain recorded bit site;

Figure 5 is a sectional view of another preferred embodiment;

Figure 6 is a greatly-enlarged plan schematic of a portion of another bit-site written-upon according to the invention;

Figure 7 is a plot of Reflectance vs for two embodiments;
Figures 8, 9 and 10 are TE micrographs of various embodiment films.

Detailed description of the invention
"Te Example"; Tellurium absorber ("Control"):

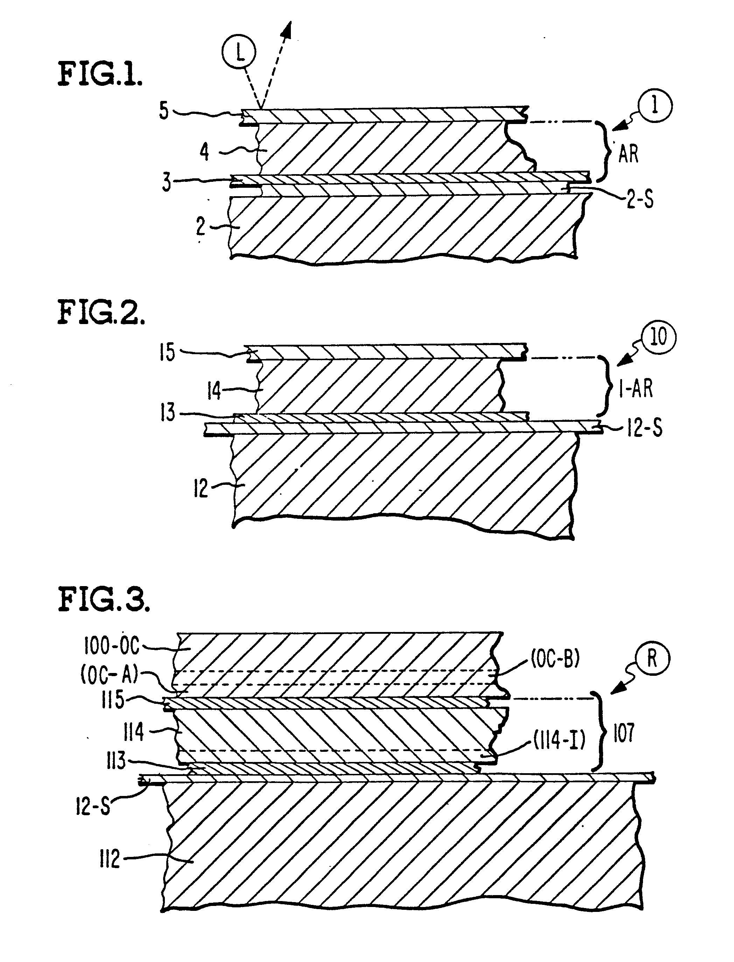

Figure 1 is a schematic illustration of an idealized cross-sectional view of an optical recording medium 1, understood as fabricated and operated generally along the lines of what is presently taught in the literature for tellurium (e.g., see Ash article). Medium 1 comprises a support 2 on which is provided an "anti-reflective" base AR and, on AR, an information layer ("absorber") 5.

Preferably base AR comprises a "reflector" layer 3, on which a transmissive "spacer" layer 4 is laid. Layers 3 and 4 may be characterized as, respectively, primarily-reflective and primarily transmissive at the contemplated read/write wavelengths. Layers 3, 4, 5 will be understood as providing a multi-layer, low-reflecting (anti-reflection) design over most of the visible spectrum as known in the art (see Ash article).

Preferably, reflector 3 is an opaque layer (e.g. approx. 60 nm satisfactory) of aluminium or the like, while spacer 4 is transparent fused silica, or a like transparent dielectric, approximately one-quarter wavelength thick. [i.e. $N \times \lambda/4$ where N=1,3,5,etc].

Support 2 preferably comprises a polished aluminum disk of the type presently used in digital magnetic recording for computer disk drives, coated with an organic smoothing (subbing) layer 2-S adapted to render a satisfactorily-smooth, flat surface for deposition of reflector layer 3.

This will be understood as preferably comprising a 14" disk to be operated at about 1800 (to several thousand) rpm with good surface smoothness (e.g., order of less than 0.1 micro-metre peak-to-peak).

A radiation (laser) beam of prescribed energy and wavelength may be understood as applied to medium 1 from a laser source L, so as to establish a "pit" or like "deformation" on layer 5 as "writing" takes place (e.g., at site "v" shown in phantom). More particularly, it will be desired to use a 10 mW gaussian beam with diameter of 0.8 μm (i.e., 800 nm or $1/\Sigma$) and scanning at 45 m/sec., to form a "pit" with a certain minimum length and width of 0.8 μm (though not necessarily circular or other prescribed shape,—this requirement is too stringent for conventional means however).

Prior art record 1 in Figure 1 will be understood as undertaken and described principally to provide a means of comparison and distinction for the invention embodiments in the following examples. And, except as otherwise specified, all materials, methods and devices and apparatus herein will be understood as implemented by known expedients according to present good practice.

Here, the metallic recording film 5 will be understood as deposited on the "transparent" dielectric spacer 4, with both thicknesses selected to yield a known low-reflectivity structure (e.g., in Bartolini article, less than 3% reflectivity obtained with 5 nm Ti on 80 nm $SiO_2^-$ spacer recording at $\lambda$=488 nm). Then, where each "pit" (bit) is recorded, this "anti-reflective" background will be disrupted such as to yield "bits" adapted for high-contrast read-back. And, where the recording wavelength is shifted, a spacer thickness is readily altered to give like results. In this "tri-layer" or "Dark Mirror" configuration surface reflectance (on absorber 5) can be made "zero" or a selected value by adjusting absorber thickness and spacer thickness. (A 'tri-layer" being here understood as comprising a transparent spacer with absorber on one face and reflector on the other).

Workers will recognize that in certain cases the reflector film may be eliminated (e.g., in favor of a "dielectric mirror") and that spacer 4 may comprise other materials/structures (e.g., several layers of like material that is also more insulative thermally).

Thus, the coating parameters here will be understood as selected to preferably provide an "anti-reflective" condition for the so-coated disk at the contemplated recording frequency when the write beam is focussed on this absorber layer. [Regarding such see: *Anti-Reflection Structures for Optical Recording*" by Bell and Spong, Journal of Quantum Elektronics, Vol. QE 14, No. 7, July, 1978; and for general prior art, see exemplary articles: "Optical Disk Systems Emerge", IEEE Spectrum by Bartolini, et al, August, 1978, page 20; and "Optical Recording Media Review" by Bartolini, SPIE Proceedings, Vol. 123, 1977, page 2; "Optical Storage Materials and Methods", SPIE Proceedings, Vol. 177, Optical Information Storage, 1979, page 56].

Preferably, deposition proceeds by thermal evaporation until the reflectance of layer 5 reaches a predetermined reflectance level.

As workers know, this may be done empirically, or by continually monitoring the reflectance of the absorber film (e.g., on a witness-chip) as layer 5 is deposited (see deposition techniques described by Zech in his cited article) or by like suitable optical techniques for deposition-monitoring; or by other known methods, such as monitoring deposited mass or by electrical properties.

Thus, one may vapor deposit an opaque layer 3 of aluminum onto coated disk 2 (all optical characteristics taken relative to contemplated R/W laser spectrum of 400—900 nm). Then, a layer 4 of $SiO_2$ (fused silica or like "transparent" dielectric) is vapor-deposited on layer 5 to a prescribed thickness, this thickness related to $\lambda_0$, the operating wavelength (—here, may be slightly less than either $\frac{1}{4}$ or $\frac{3}{4}$ $\lambda_0$). Atop layer 4 is vapor-deposited the absorber film 5 to a thickness which produces the prescribed reflectance (see below).

The reflectivity of the record medium 1 will be understood as modified at each bit-site "v" by the

6

radiation beam from write-laser L, so that, upon detection with a suitable means, the "void areas" v (i.e., "pits") may be distinguished as relatively "high reflectance spots" from the low reflectance "non-void" background surrounding them, as known in the art.

For instance, U.S. 4,285,056 to Bell describes a like medium where information is recorded as "openings" in both the absorber and transmissive spacer layers, with the lengths of the openings and of the unexposed intervening areas being varied along a specific information track to convey frequency information. This patent also calls-out various materials (e.g., among them titanium, rhodium, platinum, gold, nickel, chromium, manganese and vanadium) to be deposited using standard evaporation or electron beam evaporation techniques. By comparison, U.S. 4,183,094 to Keezer et al. calls for laser recording on Te-Ge-Se-S materials to yield "interference changes" without creating such pits.

However, Bell diverges from what is contemplated here in requiring that his spacer layer be heated by the write beam—heated sufficiently to either be itself ablated-away (i.e., to otherwise develop a void within itself) or else to be decomposed or sublimed and then out-gas sufficient to cause a "bubble" lifting the super layer (e.g., of gold)—in the present case, essentially no beam energy is to be absorbed by the analogous spacer layer.

Tellurium is a "low melting point/poor conductivity" metal commonly preferred by workers because it is felt to exhibit superior sensitivity, thus minimizing required (threshold) laser write-power.

For instance, this feeling is expressed in U.S. 4,222,071 to Bell and Bartolini, where similar tellurium films were characterized as requiring laser-power on the order of 15+ mW for writing thereon (to achieve adequate read-out, about 20% optical efficiency being assumed—the goal being to permit recovery of recorded video signals with about 40—50 dB S/N, or "broadcast quality" read-back).

[They also specified a solid state Ga-AL-As injection laser, apparently applying a continuous beam about one (1) micron in diameter at the record surface, which is the while kept moving past this beam].

U.S. 4,222,071 stresses that the absorber must be a "low melting point metal" like Te (as well as being deposited in a "continuous film", and not as "microscopic agglomerates"; i.e., evidently not as "islands" or in "insular" form as below).

Preparation of absorber layer 5; (Figure 1):

Absorber layer 5 preferably comprises a relatively thin layer of tellurium which is vapor deposited (thermally evaporated) onto spacer layer 4 (on a relatively flat—~≤1/20λ—record surface thereof. The Te is so evaporated in a high vacuum preferably using a large batch coating chamber with corresponding large coating distances and "double-rotation" of substrate, etc. to better ensure uniformity—e.g., using a refractory metal boat for a source [1.2 m box type coating chamber used in Ash article]. All dust and stains on parts should be reduced to a strict minimum, using the most rigorous "Clean Room" techniques.

Substrate 2 comprises a flat, aluminum plate polished to desirable flatness and coated with "subbing" 2-S to appropriate flatness to accommodate deposition of thin reflector layer 3 (high reflectivity over at least the "working portion" of the contemplated radiation spectrum). About 60—90 nm of aluminum (prefer about 60 nm, vapor-deposited) has been found satisfactory. Since aluminum is not a perfect reflector, workers will recognize that in some cases one will substitute a "multi-layer dielectric stack" or the like.

The spacer 4 is likewise deposited atop reflector 3. Spacer 4 is a dielectric material which is relatively transparent to the "working portion" of the laser spectrum. About 158.3 nm of vapor-deposited $SiO_2$ (silicon dioxide) has been found satisfactory for the subject purposes (e.g., for write/read at $\lambda = 632.8$ nm).

The tellurium absorber layer 5 will be understood as highly absorptive of the contemplated recording laser spectrum (e.g., typically 25% absorptive; 30% reflective; with about 45% of the beam energy transmitted (for trilayer cancellation, must transmit more than reflect). The thickness of absorptive layer 5 depends on that of spacer 4. Where transmitted light should be reduced, one may wish to increase spacer thickness (in $N \times \lambda/4$ periods—also reducing heat-loss possibly).

Workers would view the Te absorber 5, with its low melting point and a relatively short thermal diffusion length (poor conductivity) as a good, "high sensitivity" material which helps conserve incident laser energy. When a write beam from laser source L falls upon site "v" of layer 5, a small portion of its energy will be reflected, a small portion absorbed and a large portion transmitted—the transmitted portion being reflected back by layer 3 to be (principally) absorbed in layer 5. Hence both incident and reflected energy will heat film 5, minimizing transmission losses (note: deposition of 5 yielded a "tri-layer"). Variations in absorber thickness or uniformity should be scrupulously avoided since this can reduce the write-energy coupled into the absorbing film and degrade sensitivity.

Results:

For present purposes, "Sensitivity" will be understood as characterizing the write-energy $E_w$ necessary to change reflectivity (or a like read-out characteristic) sufficient to give the specified minimum read-out.

The intensity and time exposure of the focused Write-Beam will be understood as sufficient to so elevate the temperature of absorber layer 5 as to cause the indicated change in reflectivity (at v sites) giving the desired read-out quality, etc. (e.g., so that adequate contrast, S/N ratio) may be realized, as understood by workers in the art,—cf. an exemplary S/N ratio of 40—50 dB (peak-to-peak signal, vs, RMS noise) for a bandwidth of about 15 MHz.

Here, test recording is to be performed with a gas (He-Ne) laser beam operating at 632.8 nm with recording exposure from 30—470 n.sec. (usually 10 mW, 40 n.sec. or about 40 p.J.—this intended to yield minimum adequate read-out, or about 40+dB S/N, when read at lower power; e.g., viz: 150—500 pJ/cm$^2$ (pJ=10$^{-12}$ watt-sec. or Joules), with the same or similar laser equipment. Note: for this contemplated setup, assume laser focused on bit site of $\sim\frac{1}{2}$—1 micron diameter, (i.e., 500—1000 nm) and thus a write-pulse about 40 n.sec. long [60 n.sec. from rise to fall—this also accommodating disk rpm of 1800 and associated galvo-mirror focus characteristics].

The subject record 1 is so-recorded upon. It is found (relating to comparable situations in the literature, etc.) that relatively low-power laser pulses can melt the Te film sufficient to yield the well-known "pits" or "craters" and give good read-out (e.g., bit reflectance of ~50% vs. background of 1—3% at λ=632.8 nm)—however with quite a bit of "noise" too.

Such "bit-pits" will be seen to constitute actual voids (e.g., see photos in Ash article where 2—10 mW, 100 n.sec. laser pulse recorded such "craters" in like Te films—there, it was assumed that a 25 nm film of Te used in the reflective mode produced 57% reflectance, 6% transmittance, 37% absorptance at 450 nm).

However, despite the fact that such Te films are deposited as a continuous layer, the formation of the "bit-pits" (v) is described in the literature as accompanied by a surrounding rim—and it is thought that this rim is responsible for (much of the mentioned "noise").

Evidently one needs a certain MIN. Write-Energy $E_w$ within a certain minimum rise-time (e.g., with *this* laser etc. about 10 mW within 40 n.sec.) to render adequate "holes" (e.g., higher power delivered too slowly can allow heat-at absorber to leak away; thus no "bit" is written).

Such "holes" or "pits" are suggested by the hole-site at "v" in Figure 1. At least some of the absorber material 5 is then evidently softened and displaced at that bit-site, sufficient to reduce its thickness there and so give increased reflectivity (at least that is what the art conventionally teaches, e.g., see Ash article and cited U.S. 4,222,071).

Such a spot may be read-out with means known in the art; e.g., with a similar laser at low power (e.g., above described laser at 3 mW), the increase in reflected energy received (at a suitable photo-detector) is observed to yield an output signal representing the recorded bits, these being readily distinguishable from background—this read-energy being insufficient to "erase" or disturb the so-recorded bits, of course. [Note: read-out at a frequency $f_R$, where "pit-depth" introduces a phase change vs. light reflected at surface of Te such as to maximize contrast therewith].

Archival stability:

I found that the archival stability of this "Te record" was extremely poor as the literature has noted (e.g., see Ash article re oxidation, etc.). For instance, under known temperature-humidity cycling, record 1 will be found (using no overcoat on layer 5) to gain 50% of its reflectivity in about 2—3 weeks, evidently mostly via oxidation, etc. (cf. a "hole" should have "high" relative reflectance—oxide increases "background reflectance" between holes—washing-out necessary S/N). The Te film of Example I will be found characterized by a rapid increase in overall optical transmission after such "aging". This is presumably caused by a general oxidation of the metal as well as severe selected site-attack beginning at "defect sites" in the metal film, (cf. analogous test per MIL spec //810-B).

This is grossly inadequate for the mentioned "archival memory" requirements (about 10 years exposure to normal computer operating/storage conditions; see Table I).

Embodiment Examples

The following Examples are given by way of teaching some exemplary uses and advantages of "low temperature" absorbers in island-film form according to the invention. Advantages and features thereof will be better appreciated by comparing them with the "Te Example" described above.

Example I preliminary to disclosure of the invention, illustrates use of an absorber of gold material in Figure 2;

The operations, materials, methods and structure of the "Te Example" (Figure 1) described above are repeated here, except as otherwise specified, in a novel record 10 (Figure 2) having a "gold-absorber" film 15 replacing the tellurium film 5.

Record 10 will be understood as comprising a support 12 on which an "anti-reflective" base 1-AR is laid (like AR in Figure 1, preferably comprising a reflective layer 13, with a transmissive spacer layer 14 laid upon 13), with absorber film 15 placed atop substrate 1-AR (spacer 14 thereof).

Here, and according to a feature hereof, absorber 15 comprises a film of " gold material" comprising an "island layer" deposited to function as an absorber film (somewhat like the Te film in the "Te Example", e.g. in a somewhat similar process and by similar means). Here, very close attention is paid, during deposition, to controlling absorber thickness so that it yields a prescribed minimal "Dark Mirror" reflectance $R_m$ (e.g., here 10% was chosen) as further described below. Importantly, film 15 is formed to be discontinuous, being formed in an island configuration for optimal results, as shown in Figure 8 (100,000×Te micrograph) and as described below.

The underlying spacer layer 14, reflector layer 13 and substrate 12 are (at least functionally) otherwise the same as in "Te Example", and thus will be understood as functioning as a "tri-layer", with absorber 15, as understood in the art (e.g., see cited references).

Thus, gold absorber film 15 is preferably formed by vapor depositing a gold material on the surface of $SiO_2$ spacer 4 until (monitoring the well known "tri-layer" effect) surface-reflectivity of 5 first drops to preselected value $R_m$ (10% reflectance here), taking care to render the "insular" configuration. Reflectance $R_m$ may, conveniently, be set at any desired value consistant with adequate "writing" and read-out. Here, about 10% was arbitrarily selected (minimum for proper focusing, etc. of this laser) and, somewhat surprising to discver, "writing" with the mentioned laser beam (as in Te Ex.) shifted reflectance enough to give adequate read-out in the described manner (i.e., a "written spot may be seen to exhibit 25—55% reflectance, yielding the desired S/N in the 25—40 dB range—in some cases a 30—50% increase is satisfactory). Workers will appreciate how other "minimum reflectance" values may be chosen for the "virgin" absorber film.

Preparation of absorber layer 15; (Figure 2):

Absorber layer 15 thus comprises an extremely thin "island-deposit" of gold which is vapor-deposited (thermally evaporated) onto spacer layer 14 (i.e., on a relatively flat; e.g., 0.5 λ record-surface thereof).

I found that if gold is so deposited on this "tri-layer coating" only until such a "minimum reflectance" $R_m$ as 10%, the "islands" are formed such that, when subjected to the described laser write-beam (633.8 nm, 10 mW for 40 n.sec. etc.), reflectance—quite desirably, yet wholly unexpectedly!—changes significantly: quite enough for adequate read-out (e.g., going from about 10% to about 25—55%—see below for detailed discussion of Results).

The absorber film 15 is thus preferably vacuum deposited on spacer layer 14 using present preferred techniques (e.g., "pure" gold has been so deposited in large vacuum chamber at $\sim 10^{-6}$—$10^{-7}$ Torr., from a molybdenum boat which was resistance-heated—deposition rate was about .5—1 nm/sec).

Preferably, the silica layer 14 was, itself, likewise vapor-deposited before receiving the gold film 15. All substrates were cleaned according to present good practice for optical thin films.

It is important that this deposition (by thermal evaporation) proceeds only until the reflectance of film 15 first attains the predetermined "minimum-reflectance level" ($R_m$) yielding the desired "islands"— otherwise the subject results may not occur.

As workers know, this may be done empirically, or by continually monitoring the surface-reflectance of a witness-chip while absorber film 15 is deposited until satisfactory "islands" appear (and see deposition techniques described by Zech in his cited article, or by other known methods, such as monitoring deposited mass or electrical properties during deposition).

Results:

The results are most surprising as compared with conventional media like the Te absorber prepared as above-described in the "Te Example". That is, record 10 was recorded-upon, read-out and evaluated, with its sensitivity, etc., measured, as in the "Te Example" (e.g., using an He-Ne laser system of the type mentioned). The so-written bit sites appear to be "agglomerate-holes" (where absorber has been made to "agglomerate" and where absorber material may also be caused to migrate toward the hole-periphery, or beyond)—this across a hole-diameter comparable to that of the read-beam (e.g., $\frac{1}{4}$—$\frac{3}{4}$ thereof); to exhibit a like increase in reflectance and higher output signal.

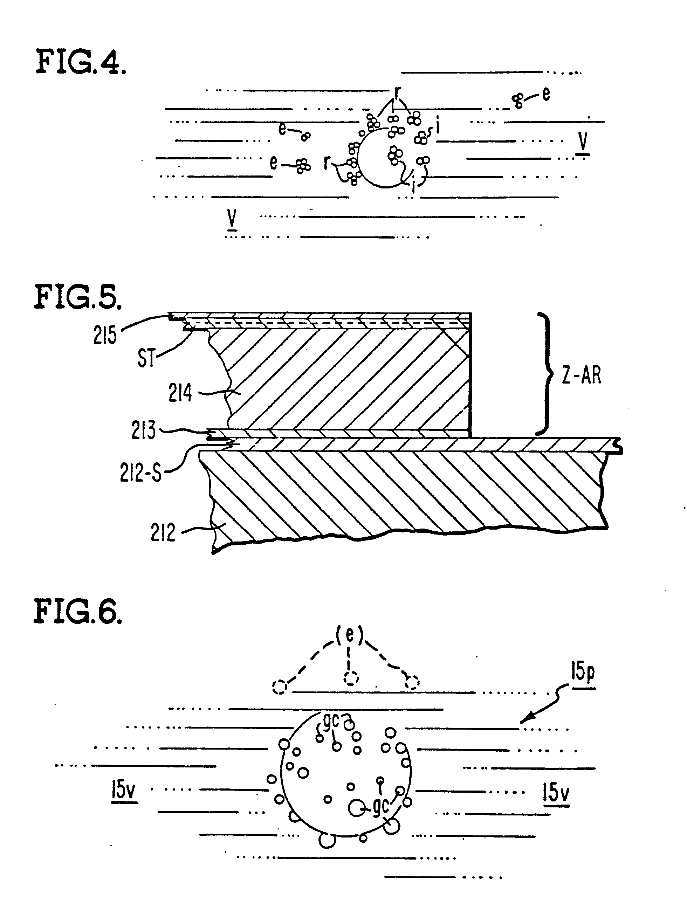

Figure 6 is an artistic rendering showing such an "agglomerate-hole" (or "quasi-pit") as seen in photomicrographs of such records. Here an "agglomerate-hole" $15_p$ will be understood as a somewhat-circular written-spot, or physical-optical discontinuity in the virgin unwritten absorber film $15_v$. Spot $15_p$ will be on the order of laser beam-diameter (e.g., 40—120% thereof) and may include a "rim" or partial-rim about its periphery. Within the rim, relatively less absorber material is usually present; what there is will be seen as consolidated into absorber-globs gL, most of which are relatively large (e.g., usually fewer, many being larger than the tiny "islands" of virgin film $15_v$ and Figure 11, (and lie relatively farther apart). In effect, spots $15_p$ will be understood as constituting an "optical void" or discontinuity at the selected read-wavelength ($\lambda_w$); whereas, the virgin island film $15_v$ appears as a relatively continuous (partial) reflector.

Thus, workers will appreciate how such "agglomerate-holes" $15_p$ can be the functional equivalent of conventional pits like those known with tellurium (see Te Ex. and references cited).

As detailed below, one finds that such an "insular" absorber film can yield a superior record; one giving considerable archival stability, unexpectedly-high sensitivity and high S/N while requiring surprisingly low write-energy, and low write-temperature evidently—and also apparently having good tolerance to an overcoat. [E.g., where a useful overcoat doesn't degrade operational performance beyond practical usefulness—as it presently does with Te absorbers, perhaps because these evidently require a relatively massive translation of absorber material—in contradistinction, workers will be pleasantly surprised to note that the invention can "record", i.e., "open" a bit-hole to pass the Read beam, without necessarily so-translating most or all of the absorber out of the bit-site—instead the invention can operate by merely "agglomerating", and thus redistributing absorber within the bit-site, with little or no material necessarily moved outside the site, or ablation-ejected therebeyond, etc.]. Details are given below.

Island form of absorber film:

Figure 8 is a microscopic plan view (100,000×TE micrograph) of the original, virgin (i.e. unrecorded- upon) reflecting surface of an Au absorber film like that above-described. It will be evident that this surface appears as a physically discontinuous, or partly discontinuous, "insular" configuration, exhibiting a fairly regular pattern (semi-islands on the $SiO_2$ spacer). For this Ex. I, the islands will be understood as having diameters on the order of a few tens nm (e.g., 10—30 nm typical), separated by intervals of comparable dimension (e.g., 5—20 nm apart—vs. laser beam 500—1,000 nm wide; cf 632.8 nm wavelength). The virgin film 15 will thus exhibit a certain "% void" range (e.g., a few % to 10% voids).

Now, subjecting a portion of this virgin film to a laser recording beam as described acts to "agglomerate" these "islands", increasing the "percent void" in the site (larger island-spacing) and ejecting some island mass out to the site periphery and beyond, see (ejecta e) forming a (small, not necessarily continuous) "rim" there in some cases—thus forming an "agglomerate-hole" as in Figure 6, this process is, here, loosely characterized as "agglomeration".

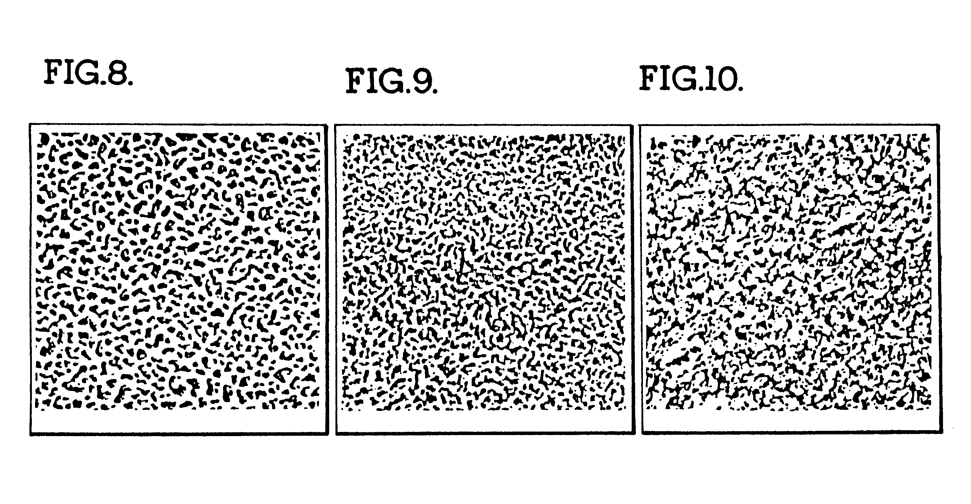

At least some of the first-order factors controlling such island formation are: absorber material, deposition-rate, adhesion; substrate material and condition (e.g. cleaning, roughness, etc). and temperature; presence of "nucleation layer", presence of vapor-contaminants (vacuum pressure) and like factors as will be appreciated by workers. For example, too-cool a substrate will render a continuous film, but too-hot will leave no film at all. In this regard workers may compare Figures 9 and 10 with referenced Figure 8. In Figure 9, a similar film was prepared (like Ex. I) except that the silica substrate was coated with a bismuth oxide layer for nucleation as known in the art. Figure 10 was similar, with a chromium nucleation layer instead. Compared with Figure 8, Figure 9 seemed to exhibit thinner islands farther apart, while Figure 10 is a continuous gold film (no islands).

The cited laser apparatus could not "write" at all on the film of Figure 10 (at cited power level); while the film of Figure 9 wrote like that of Figure 8 (Ex. I) except for a bit lower sensitivity.

Workers will appreciate that such "island" pattern can render certain desired results—taking into account such factors as read/write conditions (e.g., write-energy, beam-width, $\lambda$, etc.). Thus, in Ex. I satisfactory "bit holes" about 400 to 1000 nm diameter were formed with the specified write-beam, etc. (gave satisfactory S/N, etc.).

One infers that island-diameters which are either too large or too small will not be satisfactory. More particularly, it seems that the virgin size and spacing of the islands should be such as to accommodate the described agglomeration, upon recording, with average island diameter well below anything approaching a continuous film (i.e., sufficient spacing—percent void to thermally isolate individual islands); yet large enough (% void low enough) so that absorber film 15 "appears" like a (relatively continuous) "optical reflector" at selected $\lambda$ (R/W lasers). And spacing is presumably large enough so that when a spot is laser-heated (written-upon) it will so "agglomerate" as to form the indicated "agglomerate-hole" causing the film 15 to "optically switch" and exhibit a significant shift in detected reflectance (consistent with required S/N, etc.—i.e., so the "spot" becomes "relatively transparent" now and appears relatively "open" (transparent) to the optical system concerned, as with a conventional "pit").

Stated otherwise, the write-beam is assumed, here, to so affect the islands in a bit-site as to cause "agglomeration" and the (usually) attendant increase in average island size and spacing (increased % void area). One infers that the initial (virgin) % void will be sufficient to accommodate a prescribed minimal heat loss, radially, yet not so large that initial reflectance ($R_o$) exceeds the desired "near zero" value (required for a "Dark Mirror").

Of course, where a tri-layer is formed with its optical substrate, this will make the absorber-spacer-reflector effectively increase in reflectivity (e.g., as here, from about 10% to about 30%).

In general, one may describe this writing operation as so energizing the absorber film as to, in effect, significantly separate absorber mass at the bit site. Thus where an unwritten spot may exhibit 25% absorption—45% transmission—30% reflection, a "so-written" spot may shift these values to about 30%—10%—60%, respectively, for the subject write wavelength (tri-layer).

As this "writing" so increases the percent void (area), one infers that the write beam evidently so energizes the islands at the write-spot that their average size increases and their average spacing increases (i.e., they "agglomerate" fewer islands).

"Island-films" as such:

Now, "thin metallic films in island form" have received some attention in the literature as a general proposition (e.g., see article with this title by Doremus in J. App. Physics: June '66, Vol. 37, #7, pp 2775 et sequ. where gold films were described—also see "Optical Constants of Aggregated Gold Film" by Truong, et al. in Journal of Optical Society Am. Vol. 66, #2, February, 1976, pp. 124 et sequ. where such films were formed by evaporating onto hot glass substrates at 300°C, and wherein the authors opine "it is reasonable to assume that the particles themselves have the bulk optical constants"; also see "Structural and Electrical Properties of Discontinuous Gold Films on Glass" by Andersson and Norman in "Vacuum", Vol. 27, #4, 1977, Pergamon Press, Great Britain: studying electrical resistance of such films, indicating that this resistance exceeds that of the bulk gold).

With the exception of the above-mentioned non-prepublished documents no worker appears to have discovered that there is any advantage to using any such "island films" as an ODD laser recording medium, whether of gold or any other metal. Other workers appear to have contemplated only "continuous" absorber films (e.g., see cited U.S. 4,222,071 specifying that the absorber should "*not* be agglomerated" but should be a "continuous film"; or see IBM-TDB of March, '71, pp. 3001 teaching a continuous "metal layer such as gold plus an amorphous sub-layer" like amorphous silicon—these layers to be heated to form "a mixture of gold, crystalline silicon and amorphous silicon", etc.).

Now, as mentioned, such "island" absorber films seem rather strangely and unusually affected by a relatively low-energy "write-pulse"—so that, without evidently being heated to gold's published melting point, the islands nevertheless spread and re-agglomerate.

Workers will recognize how surprising it was that such island films could be laser-written so as to generate such "agglomerate holes". One might rather except that absorber film continuity was needed to so "spread" the softened material at the write-site (e.g., pull-apart the pit site as the cited Zech article postulates: "surface tension" causing a "transverse cavitation", etc.).

"Archival stability"; (resistance to environmental degradation):

Was found to be superior to that of the tellurium record in the "Te Example" (and to that of any known tellurium records). For instance, monitoring changes in optical reflectivity under "aging" tests (under a cycled elevated temperature/high humidity environment) will indicate that this Au film is considerably more stable than closely-similar tellurium films. Workers are well aware that gold films will be preferable to meet the stringent "archival" conditions specified here.

Unexpected "good" sensitivity

It was a great surprise that such a gold absorber could be reasonably "sensitive" as an absorber. That is, information can be satisfactorily "written" on the gold tri-layer here in the power regime of 5—15 mW/10—100 n.sec. (or 100—1000 p.J.). This is really astonishing—it is many times the sensitivity level that theory predicted.

That is, compared with known accepted "good absorbers" like Te, gold has such a relatively high (bulk) melting point (about 1063°C vs. about 450°C for Te) and such superior heat conductivity (that of Te is notoriously poor; Au is among the best!), that one would likely expect a gold absorber to exhibit practically no sensitivity at all, and to be far inferior to that of tellurium.

For instance, the literature extols tellurium as having sensitivity which is vastly superior to titanium, and titanium has a high melting point like gold but is as poor a heat conductor as Te—thus how can gold compare as an absorber? (e.g., Te has the lowest thermal conductivity of any metal, while gold's is about $100 \times$ that of Te—only Cu and Ag are more conductive).

One reason (see below) may be that a different write-mechanism (for such "bit formation" or "writing") is involved; a related reason may be the "island" form of the gold film as mentioned—evidently requiring considerably less write-energy than otherwise expected, or than the properties of "bulk gold" would indicate, to alter film reflectivity.

Low temperature recording:

A major surprise is that the indicated "reflectance transition" occurs at such low (write-) power levels and evidently at such low temperatures (indications are that this occurs at about 300°C, well-below gold's published melting point of 1063°C—and corroborated by instances where the gold islands are deposited in a polymer and so-recorded upon—the polymer melting at well below this 1063°C—see below Ex.s). This can allow workers to turn to a "high-melt" material like gold for the absorber—i.e., to a material which has superior archival properties, thus alleviating the risk of corrosion and like degradation over extended life.

Of course, the island configuration of the film may account for this apparently-reduced melting point, or it may trigger a write mechanism other than "gross melting"—one is not yet sure. One theory is that such islands possess such high internal energy that relatively little write beam-energy can trigger their "bursting" and so agglomerating, yet without necessarily "melting them as such".

In any event, workers will certainly welcome the availability of such novel "gold absorbers" because of their evident ease of manufacture, deposition and handling by well-known methods plus their evident superior archival stability and aptness for use in computer disk records (e.g., per Table I); as well as because writing the usual "transitions" on gold brings special unique advantages (—e.g., evidently dispensing with need to heat the absorber bit-site to the classic melt-temperature). Also prized will be the associated reduction in write-energy and record temperature—all these promising the ability to "laser-write" with much less energy and to write in smaller bit domains. For this reason, it is believed best if the spacer (and any overcoat) be a good thermal insulator with relatively low heat-capacitance—as further discussed below.

Workers will welcome a system whereby bits are evidently recorded without the intense heat and macroscopic changes inherent in the well-known gross melting (ablating) of the absorber film, as with a Te absorber in the above-described "Te Example" (e.g., without any such massive translation of absorber material).

Overcoating effects:

The "Te Example" was also run with a thin overcoating of SiO (100Å, vapor deposited) on the Te absorber film. This simulated an overcoat, but did not afford a true, functional overcoat of the kind workers would prefer (like several mils of a transparent polymer to permit record handling without scratching, to "defocus" surface dust, grime, etc., to impede vapor entry, e.g. of water, oxygen; to further conserve writing heat, etc.). But this SiO coat did affect "pit formation", raising required write-energy to about double. (Possibly because it so "squeezed" the Te film at the pit-site as to impede associated displacement of Te material there).

Workers have expected that such "deformation recording" (as with pits in Te, bubbles in other metals, etc.) would be resisted by any "overcoat" (e.g., read-out signal destroyed; sensitivity raised—the overcoat impeding, if not prohibiting absorber expulsion from the bit-site and barring any "ejecta" of course).

Significantly however, when a gold film like that of Example I was similarly over-coated, little or no such resistance was evident and sensitivity was only slightly degraded—further evidence that a different type of bit-forming mechanism is at work. Evidently whatever deformation and/or movement of the island mass accompanies such low-power writing of a "bit", it is better tolerated by an overcoat, i.e., the overcoat presents less resistance to the writing mechanism—this being consistent with the described "agglomeration". This amplifies the attractiveness of such absorbers, since tolerance to overcoating is very, very important.

Absence of "Bulk-Au" properties:

As another feature hereof, and based on the foregoing Example I and others, one would infer that such an "island film" absorber (of gold) is not behaving as would be predicted from its reported "Bulk" (gold) properties (e.g., radial conduction of heat is not likely to be significant). The use of such "insular film properties" is significant and is further discussed below.

It would appear that these "agglomerate-holes" (reflectivity-switching) are formed at temperatures well-below the absorber's melting temperature (of gold), that they involve little or no absorber expulsion and that so-writing requires much less write-energy.

In general, workers may expect that such insular absorber films can be used to make OD disks as contemplated (e.g., satisfying all or most of the requirements of Table I).

Ex. II: as I, use Au/Sn: Preliminary to invention

Ex. I is replicated except that instead of pure gold, the (evaporo-deposited) absorber constitutes gold plus a minor concentration of tin. This is laid-down as a laminate for convenience of deposition: first gold, then tin, then gold (alternatively, one can add other dual layers of tin and gold too). Upon heating, this "laminate" should inter-diffuse to form (mostly) an Au/Sn alloy (mostly gold, so "gold characteristics" should predominate).

This Au/Sn film is substituted as the island-film of Ex. I (for 15 in Figure 2) and is similarly written-upon. Effects: were qualitatively similar to Ex. I, while exhibiting greatly superior archivability and somewhat inferior sensitivity.

Preferred embodiment: Preliminary tin "strike" layer

It was also observed that the gold islands adhered quite poorly to the cited silica (e.g., easily wiped-off). And, when a clear polymer spacer was substituted (for better thermal isolation, etc)., the gold deposit would not really adhere at all (zero sticking coefficient).

Accordingly, a thin tin "strike" (predeposit in island form—see Ex. III) was conceived and applied as a "nucleation film", and this was rendered on the glass (followed by Au-island deposit). Later a polymer spacer was used. As Ex. III shows the results were highly promising especially with the polymer substrate—with the adhesion of gold vastly improved, but its island configuration not compromised apparently.

Ex. III—Au on Sn flash/polymer: Preferred embodiment

Fig. 5 depicts a replication of Ex. I, (Fig. 2), except that a clear polymer is used as spacer (e.g., Teflon) and a tin-flash ("strike", as adhesion promoter, etc.) is interposed under the pure-gold absorber. Thus, as before, we have a disk 212, a subbing layer 212-S on the disk, then a tri-layer 2-AR consisting of reflector 213, (clear Teflon or like polymer) spacer 214 and absorber 15 (pure Au, in island form, deposited however on Sn layer ST of islands). This was similarly written-upon.

Results:

Like Ex. I but much improved gold adhesion, sensitivity, read-out and archivability. That is, the gold (islands) adhered tightly to the substrate (Sn islands on clear polymer spacer). Sensitivity and read-out were much improved accordingly it is believed that this Sn strike not only improves adhesion (to polymer) but also "cooperates" to enhance the optical read-out—something very suprising.

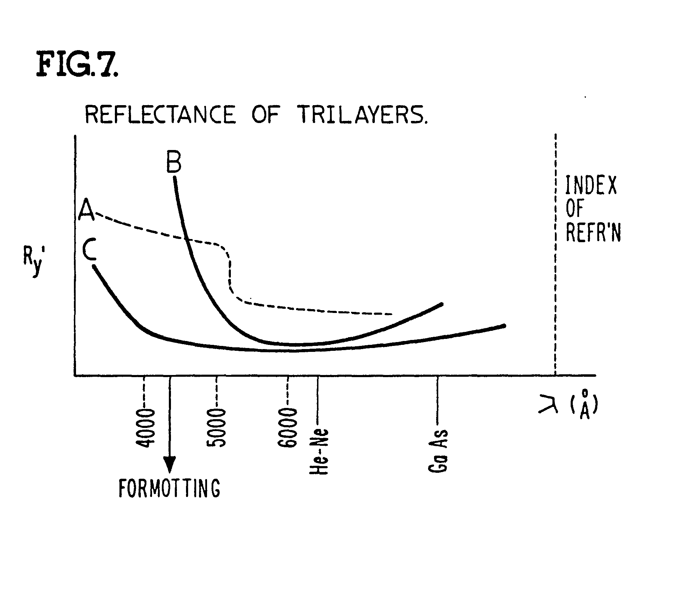

One such surprising optical effect is indicated in Fig. 7, a plot of wavelength vs. reflectance (and index of refraction) of virginal island films. A pure gold island absorber like that of Ex. I might exhibit a shift in refractive index as portrayed by curve A and a reflectance/$\lambda$ characteristic as in curve B. This obviously inhibits operating well above or below the He-Ne laser spectrum (633.8 nm—e.g., desired formatting of OD disks is not feasible at 440 nm, etc.; alternate use of Ga-As laser not feasible either). Quite surprisingly, adding the Sn (island-) strike served to "flatten" the absorber's reflectivity curve as indicated at curve C. Workers will appreciate how significant such an increased radiation bandwidth can be.

12

**0 096 504**

The archivability of Ex. I (pure Au on SiO$_2$) leaves something to be desired (e.g., in resisting intrusion of water vapor—perhaps because of its very poor adhesion); whereas this Au/Sn island array was much better.

Of course, the polymer is quite heat-degradable; accordingly the deposition steps (for Sn, then Au) will keep within its temperature limits (~100°C). Such gold films should be equal to the "archival" conditions specified here. It is projected that such "gold records" can maintain adequate read-out (30+dB) for the order of ten (10) years under typical contemplated storage and use conditions.

Ex IV: as III with overcoat: preferred embodiment

Ex. III is replicated, however adding a clear polymer supercoat on the absorber layer 15 as a protective overcoat.

Results:

Similar to Ex. III except that sensitivity is degraded a little, though is still passable. Such tolerance to overcoating is a noteworthy property; much desired in the art.

Ex. V: as III, SiO$_2$ on polymer: preferred embodiment

Ex. III is replicated except that a thin layer of SiO$_2$ is superimposed on the polymer spacer 214 (Fig. 5), with the Sn strike deposited on the SiO$_2$ then the gold.

Results:

Comparable to Ex. III, but sensitivity reduced considerably. It will come as a surprise to workers that such polymer spacers are feasible and that silica is disfavoured (silica is widely reported as preferable).

Ex. VI: Au/Sb/Sn: preferred embodiment

Ex. III is replicated (Sn strike on polymer), except that an antimony "strike" follows the Sn strike, with gold deposited thereafter.

Results;

Quite similar to Ex. V, with and a general tendency toward minimal "ejecta" as shown in Fig. 4. Co-depositing the Au-Sn-Sb will yield the same kind of results.

Tendency to form intra-hole agglomerates and ring-agglomerates is illustrated in Fig. 4, elements i, r respectively rather than "ejected" globs (see e, Fig. 4 relatively few ejecta e here; e.g., vs. prior Examples)—Fig. 4 is an idealized showing of a typical "agglomerate-hole" written on such an Au/Sb absorber, the "virgin" island configuration v not shown here.

The latter property (tendency to favour ring and localized agglomerates rather than "ejecta") is striking—it suggests a susceptibility for controlling the extent of agglomerate migration, and also suggests a hole-forming mechanism likely to be minimally affected by overcoatings (which can be expected to block all "ejecta" e).

Ex. VII: Pd-Sn preferred embodiment

Ex. III is replicated, with Pd replacing the gold however (Pd deposited onto Sn strike on polymer).

Results:

Similar to Ex. I with dearth of "ejecta". Superior archivability compared to Pd without Sn strike. Otherwise similar to Ex. III (e.g., increased bandwidth, resist vapor intrusion and related dislocation of virginal Au island, etc.).

Recapitulation:

Some results for the embodiments and examples are compared loosely and qualitatively in Table II below (here assume like structure and operating/test conditions plus overcoating; note: S'y is sensitivity, A'y is archivability; "Rim" vs. "ejecta" denotes likelihood (e.g., high, low) of forming rims or ejecta; "1°, "2°, etc. denotes "best", "second best", etc. relatively; XX indicates "not acceptable").

TABLE II

|  | Au/Sn | Au/Sn/Sb | Pd/Sn |
|---|---|---|---|
| S'y: | 6° | 3° | 4° |
| A'y: | 1° | 3° | 3° |
| Rim: | Lo | Mod. | Hi |
| ejecta | Hi | Mod. | Lo |

13

# 0 096 504

Thus, for instance, one general teaching hereof is that, in fashioning OD disks with an absorber film in "tri-layer configuration" as described, one can achieve surprisingly good sensitivity by laying-down the absorber material in island form.

Beyond that, one is taught that noble metals like gold, palladium, etc. or their alloys may be so deposited as the absorber—e.g., to enhance archival life over tellurium while securing good sensitivity.

Even more, one is taught that an island-film absorber like gold can be combined with a co-constituent like lead or antimony (e.g., in a minor %) to enhance sensitivity, and/or with a co-constituent like tin to enhance archivability and optical characteristics (e.g., increased bandwidth).

Further, one may to some degree control the hole-forming agglomeration mechanism, (e.g., to favor rim nodules on the one hand, or ejecta on the other) by combining the gold or palladium, etc. with a co-constituent (e.g., Au plus Pb or Pd plus Sn minimizes likelihood of "ejecta"; Au plus Sn and Sb to enhance S'y, A'y, bandpass and reduce ejecta).

Also, combining gold with lead, tin or antimony seems to improve its adhesion (to substrate) and help resist moisture intrusion at the absorber-spacer interface, thus enhancing archivability.

Other recording applications for such absorber films will occur to workers, such as for electron-beam or IR recording.

Workers will appreciate that such "island" (or "insular") films may comprise other metals or their alloys in certain cases (e.g., other binary alloys of Au or Pd, ternary alloys, etc. or other metals such as $P_t$, Cu, Ag, $R_h$). In many instances, the absorber film will be advantageously combined in an anti-reflection or like optical background array.

Such island films may, in certain instances, be otherwise deposited, e.g., by other vapor-deposition techniques (vapor-deposition is very practical where, as in Ex. I, etc., it may also be used to deposit other related layers such as the reflector, spacer, etc.). Vapor co-deposition will usually be preferred for "alloys". Other methods may be feasible for depositing the absorber, such as sputtering. In any event, it will usually be preferred to monitor the film during deposition to closely control the deposited island configuration.

Conclusion:

It will be understood that the preferred embodiments described herein are only exemplary, and that the invention is capable of many modifications and variations in construction, arrangement and use.

Further modifications of the invention are also possible. For example, the means and methods disclosed herein are also applicable to other ultra-thin films adapted to be optically-switched when suitably irradiated.

The above examples of possible variations of the present invention are merely illustrative. Accordingly, the present invention is to be considered as including all possible modifications and variations coming within the scope of the invention as defined by the appended claims.

## Claims

1. A method of manufacture for an optical medium (2, 3, 4, 5, or 12, 13, 14, 15, or 112, 113, 114, 115 or 212, 213, 214, 215) for storage of digital data (i) written with a laser beam thereon, said method including the steps of: depositing a light reflecting layer (3 or 13 or 113 or 213) on a supportive substrate (2 or 12 or 112, or 212); depositing an optically transparent spacer layer (4 or 14 or 114 or 214) over said reflecting layer (3 or 13 or 113 or 213); and depositing an absorber layer (5 or 15 or 115 or 215) over said spacer layer (4 or 14 or 114 or 214); the depths of said spacer layer (4 or 14 or 114 or 214) and of said absorber layer (5 or 15 or 215) being chosen to provide a predetermined degree of extinction of light of a predetermined wavelength ($\lambda_1$) reflected from said medium; said method being characterised by: providing as said absorber layer (5 or 15 or 115 or 215) a layer deposited in a divided form comprising a plurality of separate islands (V); by providing a predominance of an absorber metal in said absorber layer (5 or 15 or 115 or 215); by including the step of providing a thin island strike (ST) layer of tin onto said spacer layer (4 or 14 or 114 or 214) prior to deposition of said absorber layer (5 or 15 or 115 or 215) for said strike layer (ST) to control the degree of adhesion and the dimensions of said absorber layer islands (V); and by selecting said absorber metal from a set consisting in gold, palladium and gold alloy.

2. A method according to claim 1 including the use of a transparent polymer as said spacer layer (4 or 14 or 114 or 214).

3. A method according to claim 2 wherein said polymer is polytetrafluoroethylene.

4. A method according to any of claims 1 to 3 wherein said absorber metal is gold alloy comprising tin as an addition to said gold.

5. A method according to claim 4 wherein said absorber layer (5 or 15 or 115 or 215) comprises alternately deposited island layers of pure gold followed by pure tin.

6. A method according to any of claims 1 to 3, for use when said absorber metal is not palladium, including the step of providing an antimony strike layer (ST) over said tin strike layer (ST) prior to deposition of said absorber layer (5 or 15 or 115 or 215).

7. A method according to any of claims 1 to 3 wherein said absorber metal is said gold alloy and comprises lead in addition to gold.

14

8. A method according to claim 7 wherein said absorber layer (5 or 15 or 115 or 215) comprises alternately deposited island layers of pure lead and pure gold.

9. A method according to any of the preceding claims wherein said deposition of said absorber layer and said deposition of said island strike layer of tin are each a vapour deposition process.

**Patentansprüche**

1. Verfahren zum Herstellen eines optischen Aufzeichnungsträgers (2, 3, 4, 5; 12, 13, 14, 15; 112, 113, 114, 115; 212, 213, 214, 215) zum Speichern von digitalen Daten (i) mittels eines Laserstrahls, mit folgenden Schritten:

Aufbringen einer lichtreflektierenden Schicht (3; 13; 113; 213) auf einem Trägersubstrat (2; 12; 112; 212); Aufbringen einer optisch transparenten Abstandsschicht (4; 14; 114; 214) auf die reflektierende Schicht (3; 13; 113; 213); und

Aufbringen einer absorbierenden Schicht (5; 15; 115; 215) auf die Abstandsschicht (4; 14; 114; 214); wobei die Stärken der Abstandsschicht (4; 14; 114; 214) und der absorbierenden Schicht (5; 15; 115; 215) so gewählt sind, daß für eine bestimmte Wellenlänge (λ) des vom Aufzeichnungsträger reflektierten Lichts ein vorbestimmter Abschwächungsgrad erzielt wird;

dadurch gekennzeichnet, daß als absorbierende Schicht (5; 15; 115; 215) eine in eine Mehrzahl von getrennten Inseln (V) aufgeteilte Schicht verwendet wird;

daß in der absorbierenden Schicht (5; 15; 115; 215) eine Prädominanz von Absorbermetall erzeugt wird;

daß vor dem Aufbringen der absorbierenden Schicht (5; 15; 115; 215) auf die Abstandsschicht (4; 14; 114; 214) ein dünne Inselabdeckschicht (ST) aus Zinn aufgebracht wird, um den Grad der Adhäsion und die Abmessungen der Inseln (V) der absorbierenden Schicht zu steuern; und

daß das Absorbermetall aus der Gruppe von Gold, Palladium und Goldlegierungen ausgewählt wird.

2. Verfahren nach Anspruch 1, dadurch gekennzeichnet, daß als Abstandsschicht (4; 14; 114; 214) ein transparentes Polymer verwendet wird.

3. Verfahren nach Anspruch 2, dadurch gekennzeichnet, daß das Polymer Polytetrafluorethylen ist.

4. Verfahren nach einem oder mehreren der Ansprüche 1 bis 3, dadurch gekennzeichnet, daß das Absorbermetall eine Goldlegierung ist, die zusätzlich zum Gold Zinn enthält.

5. Verfahren nach Anspruch 4, dadurch gekennzeichnet, daß die absorbierende Schicht (5; 15; 115; 215) abwechselnd aufgebrachte Inselschichten aus reinem Gold und reinem Zinn enthält.

6. Verfahren nach einem oder mehreren der Ansprüche 1 bis 3, für den Fall daß das Absorbermetall nicht Palladium ist, dadurch gekennzeichnet, daß über der Zinn-Abdeckschicht (ST) eine Antimon-Abdeckschicht (ST) aufgebracht wird, bevor die Absorberschicht (5; 15; 115; 215) aufgebracht wird.

7. Verfahren nach einem der oder mehreren der Ansprüche 1 bis 3, dadurch gekennzeichnet, daß das Absorbermetall eine Goldlegierung ist und zusätzlich zum Gold Blei enthält.

8. Verfahren nach Anspruch 7, dadurch gekennzeichnet, daß die absorbierende Schicht (5; 15; 115; 215) abwechselnd aufgebrachte Inselschichten aus reinem Blei und reinem Gold enthält.

9. Verfahren nach einem oder mehreren der vorstehenden Ansprüche, dadurch gekennzeichnet, daß sowohl das Aufbringen der absorbierenden Schicht, als auch das Aufbringen der Inselabdeckschicht aus Zinn im Aufdampfverfahren erfolgt.

**Revendications**

1. Procédé de fabrication d'un milieu optique (2, 3, 4, 5 ou 12, 13, 14, 15 ou 112, 113, 114, 115 ou 212, 213, 214, 215) pour le stockage de données numériques (i) inscrites par le faisceau-laser sur ce milieu, ce procédé comprenant les étapes suivantes: dépôt d'une couche réfléchissant la lumière (3 ou 13 ou 113 ou 213) sur un substrat de support (2 ou 12 ou 112 ou 212); dépôt d'une couche d'écartement optiquement transparente (4 ou 14 ou 114 ou 214) sur la couche réfléchissante (3 ou 13 ou 113 ou 213); et dépôt d'une couche absorbante (5 ou 15 ou 115 ou 215) sur la couche d'écartement (4 ou 14 ou 114 ou 214); l'épaisseur de la couche d'écartement (4 ou 14 ou 114 ou 214) et celle de la couche absorbante (5 ou 15 ou 115 ou 215) étant choisies pour arriver à un degré d'extinction prédéterminé de la lumière d'une longueur d'onde déterminée (λ1) réfléchie par le milieu, procédé caractérisé par les points suivants: on réalise comme couche absorbante (5 ou 15 ou 115 ou 215) une couche déposée sous forme divisée formée d'un ensemble d'îlots séparés (V), on réalise une prédominance de métal absorbant dans la couche absorbante (5 ou 15, 115 ou 215) en incluant l'étape de réalisation d'une couche de rencontre d'îlots (ST), mince en étain sur la couche d'écartement (4 ou 14 ou 114 ou 214) avant le dépôt de la couche absorbante (5 ou 15, 115 ou 215) pour que la couche de rencontre (ST) règle le degré d'adhérence et les dimensions des îlots de la couche absorbante (V) et on choisit le métal absorbant dans le groupe formé par l'or, le palladium et les alliages de l'or.

2. Procédé selon la revendication 1, caractérise en ce qu'on utilise un polymère transparent comme couche d'écartement (4 ou 14 ou 114 ou 214).

3. Procédé selon la revendication 2, caractérisé en ce que le polymère est du polytétrafluoréthylène.

4. Procédé selon l'une quelconque des revendications 1 à 3, caractérisé en ce que le métal absorbant est un alliage d'or contenant de l'étain comme additif à l'or.

5. Procédé selon la revendication 4, caractérisé en ce que la couche absorbante (5 ou 15 ou 115 ou 215) est formée d'une alternance de couches en îlots d'or pur suivi d'étain pur.

6. Procédé selon l'une quelconque des revendications 1 à 3 applicable à un métal absorbant qui n'est pas du palladium, caractérisé en ce qu'on réalise un couche de rencontre (ST) d'antimoine sur la couche de rencontre d'étain (ST) avant de déposer la couche absorbante (5 ou 15 ou 115 ou 215).

7. Procédé selon l'une quelconque des revendications 1 à 3, caractérisé en ce que le métal absorbant est un alliage d'or et contient du plomb en plus de l'or.

8. Procédé selon la revendication 7, caractérisé en ce que la couche absorbante (5 ou 15 ou 115 ou 215) contient une alternance de couches en îlots de plomb pur et d'or pur.

9. Procédé selon l'une quelconque des revendications précédentes, caractérisé en ce que le dépôt de la couche absorbante et le dépôt de la couche de rencontre en îlots de plomb sont chacun déposés par un procédé de dépôt à la vapeur.

**FIG.1.**

**FIG.2.**

**FIG.3.**

1

FIG.4.

FIG.5.

FIG.6.

# FIG.7.

REFLECTANCE OF TRILAYERS.

FIG.8.    FIG.9.    FIG.10.